# EUROPEAN PATENT APPLICATION

(11) **EP 4 428 515 A1**
(43) Date of publication of application: **11.09.2024**
(21) Application number: 21965956.2
(22) Date of filing: 30.11.2021
(51) Int. Cl.: G01M 17/007, G07C 5/08

(54) **SCENARIO ACQUISITION METHOD AND APPARATUS**

(71) Applicant: Huawei Technologies Co., Ltd., Shenzhen, Guangdong 518129 (CN)
(72) Inventor: GAN, Guodong, Shenzhen, Guangdong 518129 (CN); MA, Sha, Shenzhen, Guangdong 518129 (CN)
(74) Representative: Isarpatent
(86) International application number: PCT/CN2021/134647
(87) International publication number: WO 2023/097519

(57) **Abstract**

A scenario obtaining method and an apparatus are provided. The method includes: obtaining testing data of a driving system in at least one testing scenario, where the testing data includes behavioral data of the driving system in the at least one testing scenario; and determining at least one critical testing scenario in the at least one testing scenario, where a score corresponding to the at least one critical testing scenario is greater than or equal to a first preset threshold; and the score corresponding to the at least one critical testing scenario is obtained based on testing data of the critical testing scenario and at least one evaluation item, and the at least one evaluation item represents criticality of a testing scenario. This may save time and reduce labor costs in a scenario extraction process, to improve testing efficiency of testing the driving system.

## Description

### TECHNICAL FIELD

This application relates to the field of intelligent vehicles, and in particular, to a scenario obtaining method and an apparatus.

### BACKGROUND

As a vehicle becomes increasingly intelligent, an intelligent driving system becomes an important part of an intelligent vehicle. The intelligent driving system may be classified into a driving assistance system, an autonomous driving system, and the like. To improve a capability of the intelligent driving system to cope with a complex driving scenario, the intelligent driving system needs to be fully tested. Testing of the intelligent driving system is mainly divided into three phases: simulation testing, closed-course testing, and actual on-road testing. How to design an appropriate testing scenario to test an autonomous driving function, explore a long-tail scenario, and improve a testing coverage rate is an urgent problem to be resolved. To resolve this problem, simulation testing in a virtual environment has a clear advantage.

Currently, testing scenarios are obtained mainly by manual editing, road testing data extraction, parameter generalization, automatic traffic flow generation, and the like. After the testing scenarios are obtained, a large quantity of testing scenarios are run in the virtual environment to test performance of the intelligent driving system. Then, an evaluation (metric) algorithm is compiled to determine whether the intelligent driving system violates a regulation in each testing scenario (for example, whether an ego-vehicle is driven onto a solid line, exceeds a speed limit, or slams a brake on during driving). In this way, a violation scenario is selected, and a manual check is performed, so that an expected violation scenario is extracted and used as a critical scenario to analyze, locate, or reproduce a problem in the intelligent driving system. Therefore, how to improve efficiency of testing a driving system is a technical problem that urgently needs to be resolved.

### SUMMARY

This application provides a scenario obtaining method and an apparatus, to improve testing efficiency of testing a driving system.

According to a first aspect, this application provides a scenario obtaining method. The method is applied to a scenario obtaining apparatus, and the method includes: obtaining testing data of a driving system in at least one testing scenario, where the testing data includes behavioral data of the driving system in the at least one testing scenario; and determining at least one critical testing scenario in the at least one testing scenario, where a score corresponding to the at least one critical testing scenario is greater than or equal to a first preset threshold; and the score corresponding to the at least one critical testing scenario is obtained based on testing data of the critical testing scenario and at least one evaluation item, and the at least one evaluation item represents criticality of a testing scenario. In this method, the critical testing scenario whose score is greater than or equal to the first preset threshold is selected by using the obtained score corresponding to the at least one critical scenario. There is no need to evaluate a to-be-tested function for all testing scenarios and manually check a scenario in which evaluation fails. This may reduce time for a scenario extraction process, reduce labor costs, and improve testing efficiency of testing the driving system.

In a possible implementation, the score corresponding to the at least one critical testing scenario is obtained based on the testing data of the critical testing scenario and a weight corresponding to each of the at least one evaluation item.

In a possible implementation, the weight corresponding to each of the at least one evaluation item may be preconfigured, and the weight corresponding to each of the at least one evaluation item belongs to a predefined weight set.

In a possible implementation, the weight corresponding to each of the at least one evaluation item may be dynamically configured, and the weight corresponding to each of the at least one evaluation item is obtained based on a to-be-tested function, an environment, or a region. For example, the weight corresponding to each of the at least one evaluation item is obtained based on the to-be-tested function, and a weight that corresponds to each of the at least one evaluation item and that is dynamically configured based on a different to-be-tested function is different. For example, the weight corresponding to each of the at least one evaluation item is obtained based on the environment, and a weight that corresponds to each of the at least one evaluation item and that is dynamically configured based on a different environment is different. For example, the weight corresponding to each of the at least one evaluation item is obtained based on the region, and a weight that corresponds to each of the at least one evaluation item and that is dynamically configured based on a different region is different. In this manner, the weight corresponding to each of the at least one evaluation item may be dynamically configured based on an actual situation.

In a possible implementation, the score corresponding to the at least one critical testing scenario is greater than or equal to the first preset threshold, and the testing data of the at least one critical testing scenario meets at least one evaluation metric corresponding to the to-be-tested function. In this manner, a critical testing scenario with a high value for testing the to-be-tested function of the driving system may be specifically selected from the at least one testing scenario.

In a possible implementation, the at least one evaluation item includes one or more of the following items:
a road type;
a frequency of interaction between a vehicle and a traffic participant;
a quantity of traffic participants counted in a range with the vehicle as a center of a circle and a preset distance as a radius;
a weather condition; or
a road surface condition.

According to a second aspect, this application provides a scenario obtaining method. The method is applied to a scenario obtaining apparatus, and the method includes: obtaining testing data of a driving system in at least one testing scenario included in at least one testing scenario set, where the testing data includes behavioral data of the driving system in the at least one testing scenario; and determining a plurality of testing scenarios in the at least one testing scenario set, where the plurality of testing scenarios belong to one or more sets in the at least one testing scenario set, and a comprehensive score of each set of the one or more sets falls within a predefined range; and the comprehensive score of each set is obtained based on testing data of each set and at least one evaluation item, and the at least one evaluation item represents criticality of a testing scenario. In this method, after the comprehensive score of each testing scenario set is obtained, the plurality of testing scenarios are selected from a set whose comprehensive score falls within the predefined range. There is no need to evaluate a to-be-tested function for all testing scenarios and manually check a scenario in which evaluation fails. This may reduce time for a scenario extraction process, reduce labor costs, and improve testing efficiency of testing the driving system.

In a possible implementation, the comprehensive score of each set is obtained based on the testing data of each set and a weight corresponding to each of the at least one evaluation item.

In a possible implementation, the weight corresponding to each of the at least one evaluation item may be preconfigured, and the weight corresponding to each of the at least one evaluation item belongs to a predefined weight set.

In a possible implementation, the weight corresponding to each of the at least one evaluation item may be dynamically configured, and the weight corresponding to each of the at least one evaluation item is obtained based on a to-be-tested function, an environment, or a region. For example, the weight corresponding to each of the at least one evaluation item is obtained based on the to-be-tested function, and a weight that corresponds to each of the at least one evaluation item and that is dynamically configured based on a different to-be-tested function is different. For example, the weight corresponding to each of the at least one evaluation item is obtained based on the environment, and a weight that corresponds to each of the at least one evaluation item and that is dynamically configured based on a different environment is different. For example, the weight corresponding to each of the at least one evaluation item is obtained based on the region, and a weight that corresponds to each of the at least one evaluation item and that is dynamically configured based on a different region is different. In this manner, the weight corresponding to each of the at least one evaluation item may be dynamically configured based on an actual situation.

In a possible implementation, the comprehensive score of each set of the one or more sets is obtained based on a quantity of testing scenarios that are in each set and whose scores fall within each of at least one score range, where the score of the testing scenario is obtained based on testing data of the testing scenario and the at least one evaluation item. In this manner, a large quantity of testing scenario sets with high criticality may be selected from the at least one testing scenario set, to help select, from the large quantity of testing scenario sets with high criticality, a critical testing scenario with a high value for testing performance of the driving system.

In a possible implementation, the comprehensive score of each set of the one or more sets is obtained based on a quantity of testing scenarios that are in each set and that meet a preset condition, where the preset condition includes that a score of a testing scenario is greater than or equal to a preset threshold, and testing data of the testing scenario meets at least one evaluation metric corresponding to the to-be-tested function. In this manner, a large quantity of testing scenario sets with high criticality and with a high value for testing the to-be-tested function of the driving system may be specifically selected from the at least one testing scenario set, to help select, from the large quantity of testing scenario sets with high criticality, a critical testing scenario with a high value for testing the to-be-tested function of the driving system.

In a possible implementation, the at least one evaluation item includes one or more of the following items:
a road type;
a frequency of interaction between a vehicle and a traffic participant;
a quantity of traffic participants counted in a range with the vehicle as a center of a circle and a preset distance as a radius;
a weather condition; or
a road surface condition.

According to a third aspect, this application further provides a scenario obtaining apparatus, configured to perform the method according to any one of the foregoing aspects or the possible implementations of the foregoing aspects. Specifically, the scenario obtaining apparatus may include a module/unit configured to perform the method according to any one of the foregoing aspects or the possible implementations of the foregoing aspects. The module/unit may be implemented by using hardware, or may be implemented by hardware executing corresponding software.

According to a fourth aspect, this application further provides a scenario obtaining apparatus. The scenario obtaining apparatus includes at least one processor and a memory. The memory is configured to store a computer program or instructions. The processor is configured to invoke the computer program or instructions from the memory and run the computer program or instructions. When the processor executes the computer program or the instructions in the memory, the scenario obtaining apparatus is enabled to perform the operation steps of the method according to any one of the first aspect or the possible implementations of the first aspect, or perform the operation steps of the method according to any one of the second aspect or the possible implementations of the second aspect.

According to a fifth aspect, this application further provides a vehicle. The vehicle includes an apparatus configured to perform the method according to any one of the first aspect or the possible implementations of the first aspect, or the vehicle includes an apparatus configured to perform the method according to any one of the second aspect or the possible implementations of the second aspect.

According to a sixth aspect, this application further provides a computer-readable storage medium. The computer-readable storage medium stores a computer program. When the computer program is run, the operation steps of the method according to any one of the first aspect or the possible implementations of the first aspect are implemented, or the operation steps of the method according to any one of the second aspect or the possible implementations of the second aspect are implemented.

According to a seventh aspect, this application provides a computer program product. The computer program product includes a computer program or instructions. When the computer program or the instructions is/are executed by a communication apparatus, the operation steps of the method according to any one of the first aspect or the possible implementations of the first aspect are implemented, or the operation steps of the method according to any one of the second aspect or the possible implementations of the second aspect are implemented.

### BRIEF DESCRIPTION OF DRAWINGS

FIG. 1 is a schematic flowchart of a scenario obtaining method according to an embodiment of this application;
FIG. 2 is a schematic diagram of a junction scenario according to an embodiment of this application;
FIG. 3 is a schematic diagram of a curved road scenario according to an embodiment of this application;
FIG. 4 is a schematic diagram of a straight road scenario according to an embodiment of this application;
FIG. 5 is a schematic flowchart of a scenario obtaining method according to an embodiment of this application;
FIG. 6 is a schematic flowchart of a scenario obtaining method according to an embodiment of this application;
FIG. 7 is a schematic diagram of score statistics of different testing sets according to an embodiment of this application;
FIG. 8 is a schematic diagram of an evaluation procedure according to an embodiment of this application;
FIG. 9 is a schematic diagram of a scenario obtaining apparatus according to an embodiment of this application; and
FIG. 10 is a schematic diagram of a scenario obtaining apparatus according to an embodiment of this application.

### DESCRIPTION OF EMBODIMENTS

The following further describes in detail this application with reference to accompanying drawings. Clearly, the described embodiments are some but not all of embodiments of this application. A specific operation method in a method embodiment may also be applied to an apparatus embodiment. In descriptions of embodiments of this application, a person of ordinary skill in the art may understand that various reference numerals such as "first" and "second" in this application are merely used for differentiation for ease of description, and are not used to limit the scope of embodiments of this application, or represent a sequence. "A plurality of" means two or more. The term "and/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects. "At least one" means one or more. "At least two" means two or more. "At least one", "anyone", or a similar expression thereof indicates any combination of the items, and includes a singular item (piece) or any combination of plural items (pieces).

Intelligent driving systems become an important part of intelligent vehicles. The intelligent driving systems may include a driving assistance system, an autonomous driving system, and the like. To improve a capability of the intelligent driving system to cope with a complex driving scenario, the intelligent driving system needs to be fully tested. Testing is mainly divided into three phases: simulation testing, closed-course testing, and actual on-road testing. How to design an appropriate testing scenario to test an autonomous driving function, explore a long-tail scenario, and improve a testing coverage rate is an urgent problem to be resolved. To resolve this problem, simulation testing in a virtual environment has a clear advantage. The simulation testing mainly digitally restores an application scenario of autonomous driving in a manner of mathematical modeling, and establishes a system model that is as close to the real world as possible. The intelligent driving system and an algorithm may be tested and verified directly by using software to perform simulation testing without a need for a real vehicle.

Currently, testing scenarios are obtained mainly by manual editing, road testing data extraction, parameter generalization, and traffic flow generation. After the testing scenarios are obtained, a large quantity of testing scenarios are run in the virtual environment to test performance of the intelligent driving system. Then, an evaluation (metric) algorithm is compiled to determine whether the intelligent driving system violates a regulation in each testing scenario (for example, whether an ego-vehicle is driven onto a solid line, exceeds a speed limit, or slams a brake on). In this way, a violation scenario is selected. To ensure accuracy of selecting a violation scenario, the violation scenario further needs to be manually checked, to check whether there is a problem in a metric algorithm (where for example, the metric algorithm is not correctly expressed), causing an evaluation result to be a violation scenario. If there is a problem in the metric algorithm, the metric algorithm is adjusted, and an adjusted metric algorithm is used again to determine whether a scenario violates a regulation. If there is no problem in the metric algorithm, the violation scenario may be added to a scenario library as a critical scenario. A critical scenario in the scenario library is used for a subsequent development iteration of the intelligent driving system. For robustness of the metric algorithm, a great deal of verification of different testing sets is required. Generally, a plurality of rounds of iterations (a plurality of times of verification) are required to achieve high accuracy. In addition, for a metric algorithm corresponding to a newly added to-be-tested function, the foregoing process further needs to be repeated for a plurality of rounds. However, there are many unreasonable scenarios in testing scenarios obtained in the current manner of obtaining a testing scenario. For example, a testing function that can be implemented by a scenario that is obtained through manual editing is simple and scenario complexity is low, and consequently only a basic function of the intelligent driving system can be tested generally. For another example, scenarios obtained through road testing data extraction are severely homogeneous (where for example, an ego-vehicle travels straight, and there is no another participant around the ego-vehicle; or for another example, the ego-vehicle travels, and another traffic participant enters or exits in a distance far from the ego-vehicle). For another example, a high proportion of scenarios that are obtained through parameter generalization or automatic traffic flow generation based on basic scenarios are unreasonable scenarios. These unreasonable scenarios cannot be used as critical scenarios. These unreasonable scenarios consume a large amount of analysis time and labor costs, and especially a process of extracting critical scenarios consumes more time and labor costs when the critical scenarios are extracted from a large quantity of testing scenarios (for example, millions of or even tens of millions of testing scenarios). This results in low efficiency of testing the intelligent driving system.

In view of this, embodiments of this application provide a scenario obtaining method. A critical testing scenario is selected based on a score corresponding to at least one testing scenario, to save time for a scenario extraction process, reduce labor costs, and improve testing efficiency of testing the intelligent driving system.

It should be noted that, the industry proposes a classification standard for a driving automation system. A classification standard proposed by the Society of Automotive Engineers International (society of automotive engineers international, SAE International for short) includes six levels: L0 to L5. From L0 to L2, a driver support system can provide some support functions for a driver. However, no matter whether driver support functions of a vehicle are enabled, the driver needs to drive the vehicle in person, constantly monitor these driver support functions provided by the driver support system, and turn, brake, or accelerate as required to ensure safety. Differences between support functions of L0, L1, and L2 lie in that L0 is driving-free automation, and a support function of L0 is limited to providing an alarm and instant assistance; a support function of L1 is to provide a driver with support in turning or braking/accelerating; and a support function of L2 is to provide a driver with support in turning and braking/accelerating. L3 is semi-autonomous driving. An autonomous driving system may complete some driving tasks, and may also monitor a driving environment in some cases, but a driver needs to be prepared to obtain a driving control right at any time. For example, when a function sends a request, the driver needs to perform driving. L4 is high-level autonomous driving. An autonomous driving system may complete driving tasks and monitor a driving environment in a specific environment and under a specific condition. L5 is fully autonomous driving. An autonomous driving system may complete all driving tasks under all conditions.

In embodiments of this application, the intelligent driving system may include a driving assistance system and an autonomous driving system. For example, the driving assistance system may be a driving automation system that reaches L0 to L2, and the autonomous driving system is a driving automation system that reaches L3 to L5 or higher.

The following describes the scenario obtaining method in embodiments of this application with reference to a method flowchart.

### Embodiment 1

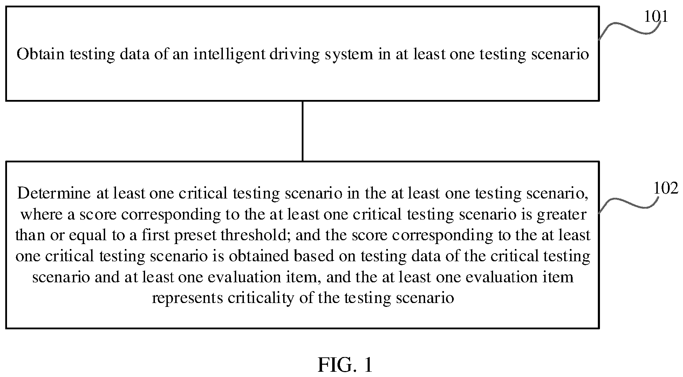

FIG. 1 is a schematic flowchart of a scenario obtaining method according to an embodiment of this application. The method may be performed by an autonomous driving scenario extracting apparatus. As shown in FIG. 1, the method may include the following steps:
Step 101: Obtain testing data of an intelligent driving system in at least one testing scenario.

The testing data is data that is run by a vehicle (referred to as an ego-vehicle below) corresponding to the intelligent driving system in the at least one testing scenario in a virtual environment. The testing data includes behavioral data of the intelligent driving system in the at least one testing scenario. The behavioral data may include environmental data (for example, another vehicle, weather, a road surface condition, a traffic light, a traffic sign, or a traffic police) detected by the ego-vehicle in the at least one testing scenario, and/or a response result of the ego-vehicle in response to the at least one testing scenario. For example, in a junction scenario, whether the ego-vehicle runs a red light at a junction when the traffic light is red. For another example, on a highway, whether the ego-vehicle decelerates in response to deceleration of a vehicle in front of the ego-vehicle or whether a collision occurs when the vehicle in front of the ego-vehicle suddenly decelerates on a driving lane on which the ego-vehicle travels.

Step 102: Determine at least one critical testing scenario in the at least one testing scenario, where a score corresponding to the at least one critical testing scenario is greater than or equal to a first preset threshold. A specific value of the first preset threshold is not limited herein. The score corresponding to the at least one critical testing scenario is obtained based on testing data of the critical testing scenario and at least one evaluation item, and the at least one evaluation item represents criticality of a testing scenario.

In a possible implementation, the at least one evaluation item includes one or more of the following items:

### (1) A road type:

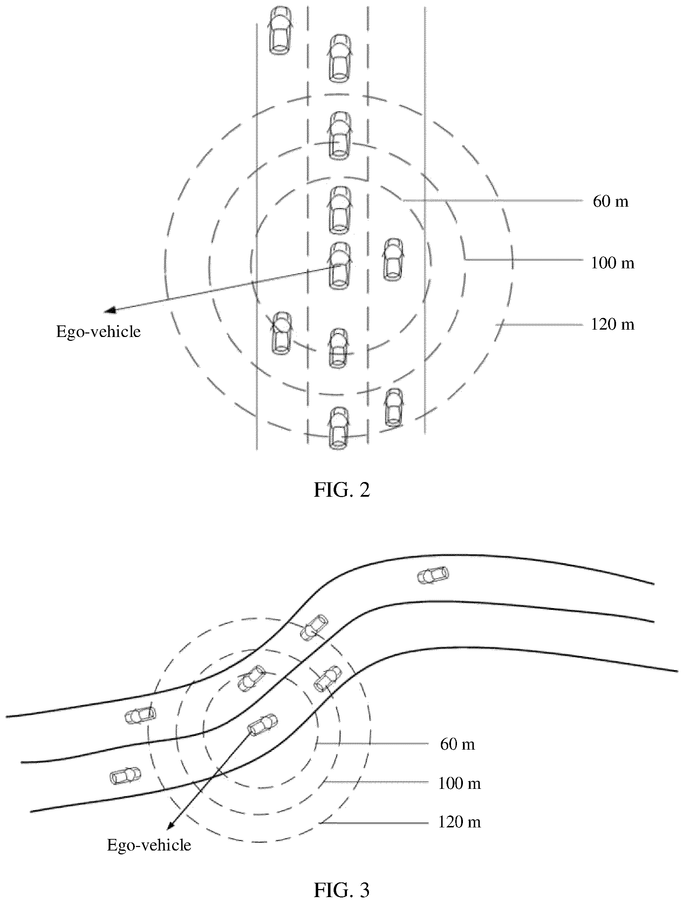

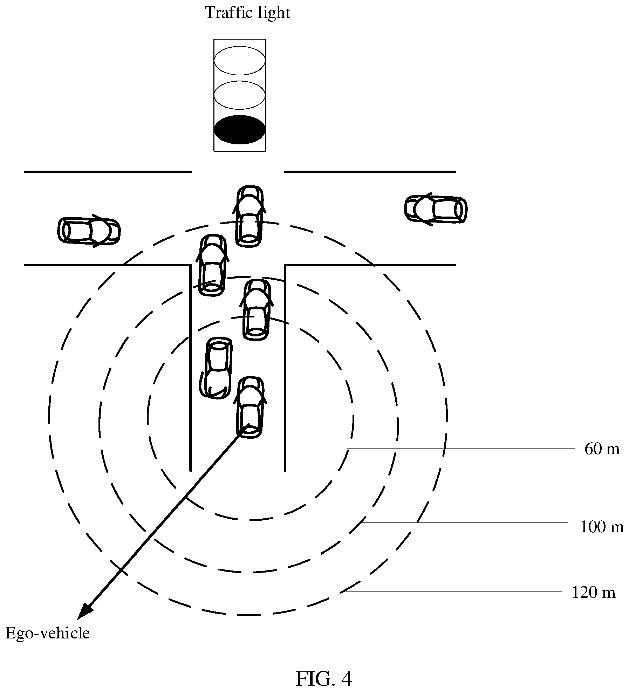

For example, the road type may include but is not limited to a straight road shown in FIG. 2, a curved road shown in FIG. 3, and a junction and an overpass shown in FIG. 4.

### (2) A frequency of interaction between a vehicle and a traffic participant:

The frequency of interaction is a quantity of times that another vehicle (also referred to as another vehicle) around the vehicle (also referred to as the ego-vehicle) interacts with the ego-vehicle. Interaction between the another vehicle and the ego-vehicle may be understood as follows: In a subsequent driving process of the ego-vehicle, (a driver or an autonomous driving system of the ego-vehicle) needs to notice existence of the another vehicle, to avoid a collision with the another vehicle. In addition, a driving track of the ego-vehicle is usually affected by a driving track of the another vehicle in this process. For example, when the another vehicle on another lane travels into a current lane on which the ego-vehicle travels, and the another vehicle is in front of the ego-vehicle when traveling into the current lane, one time of interaction occurs. In this case, the frequency of interaction is 1. When the another vehicle travels away from the current lane to another lane, another time of interaction occurs. In this case, the frequency of interaction is 2.

### (3) A quantity of traffic participants counted in a range with the vehicle as a center of a circle and a preset distance as a radius:

For example, a quantity of traffic participants is counted in a range with the vehicle as a center of the circle and 60 m as a radius. For another example, a quantity of traffic participants is counted in a range with the vehicle as a center of the circle and 100 m as a radius. For still another example, a quantity of traffic participants is counted in a range with the vehicle as a center of the circle and 120 m as a radius.

### (4) A weather condition:

For example, the weather condition may include but is not limited to snowing, raining, heavy fog, and strong wind.

### (5) A road surface condition:

For example, the road surface condition may include but is not limited to snow accumulation, wetness and slipperiness, freezing, bumpiness, and flatness.

In a possible implementation, after the testing data of the intelligent driving system in the at least one testing scenario is obtained, a score of each testing scenario may be determined based on the testing data in the at least one testing scenario and the at least one evaluation item, and then a scenario whose score is greater than or equal to the first preset threshold is determined from the at least one testing scenario as a critical testing scenario.

For example, after the testing data of the intelligent driving system in the at least one testing scenario is obtained, specific content (or a specific value) corresponding to the at least one evaluation item in each testing scenario may be determined based on the testing data in the at least one testing scenario. For example, a testing scenario is the testing scenario shown in FIG. 2, and the at least one evaluation item includes a road type, a frequency of interaction between a vehicle and a traffic participant, and a quantity of traffic participants counted in a range with the vehicle as a center of a circle and 60 m as a radius. The testing data includes a road condition recorded when the ego-vehicle travels in the testing scenario shown in FIG. 2. It may be determined, based on the road condition, that specific content of the evaluation item (the road type) is a straight road. The testing data may alternatively include a status of interaction between the ego-vehicle and another vehicle when the ego-vehicle travels in the testing scenario shown in FIG. 2. It may be determined, based on the status of interaction between the ego-vehicle and the another vehicle, that a specific value of the evaluation item (the frequency of interaction between the vehicle and the traffic participant) is 3. The testing data may alternatively include a status of another vehicle that appears within a range of 60 m around the ego-vehicle when the ego-vehicle travels in the testing scenario shown in FIG. 2. It may be determined, based on the status of the another vehicle, that a specific value of the evaluation item (the quantity of traffic participants counted in the range with the vehicle as the center of the circle and 60 m as the radius) is 4.

Then, a score of the at least one evaluation item is determined based on the specific content (or the specific value) corresponding to the at least one evaluation item in each testing scenario, to determine the score of each testing scenario based on the score of the at least one evaluation item.

For example, scores corresponding to the at least one evaluation item may be set to be different. For example, different scores are set for different road types. A road type with higher complexity corresponds to a higher score. For example, a score corresponding to a junction is 5, a score corresponding to a curved road is 3, and a score corresponding to a straight road is 1. For another example, scores corresponding to ranges of different frequencies of interaction are different. If a frequency of interaction is greater than or equal to 5, a corresponding score is 5. If a frequency of interaction is greater than or equal to 2 and less than 5, a corresponding score is 3. If a frequency of interaction is less than 2, a corresponding score is 1. For still another example, scores corresponding to different quantities of traffic participants within a range of 60 m around the ego-vehicle may be set to be different. If a quantity of traffic participants is greater than or equal to 5, a corresponding score is 5. If a quantity of traffic participants is greater than or equal to 2 and less than 5, a corresponding score is 3. If a quantity of traffic participants is less than 2, a corresponding score is 1.

Then, a sum of scores corresponding to the at least one evaluation item in each testing scenario is determined as the score of each testing scenario based on the testing data in each testing scenario and the score corresponding to the at least one evaluation item. For example, in the testing scenario shown in FIG. 3, the at least one evaluation item includes a road type, a frequency of interaction between a vehicle and a traffic participant, and a quantity of traffic participants counted within a range of 60 m around the vehicle. A score corresponding to a curved road is 3, a score corresponding to the quantity of traffic participants (which is 1) within a range of 60 m around the ego-vehicle is 1, and a score corresponding to the frequency of interaction (which is 2) is 3. Therefore, a score of the testing scenario shown in FIG. 3 is 7.

In another possible implementation, the score corresponding to the at least one critical testing scenario is obtained based on the testing data of the critical testing scenario, the at least one evaluation item, and a weight corresponding to each of the at least one evaluation item.

For example, after the testing data of the intelligent driving system in the at least one testing scenario is obtained, specific content (or a specific value) corresponding to the at least one evaluation item in each testing scenario may be determined based on the testing data in the at least one testing scenario. Then, the weight corresponding to the at least one evaluation item is determined based on the specific content (or the specific value) corresponding to the at least one evaluation item in each testing scenario, and then a score of each testing scenario is determined based on a score of the at least one evaluation item and the weight of the at least one evaluation item.

In some embodiments, the weight corresponding to each of the at least one evaluation item may be preconfigured, and the weight corresponding to each of the at least one evaluation item belongs to a predefined weight set.

In an example, different weights are set for different road types. For example, weights corresponding to a junction (junction), a curved road, and a straight road are respectively 0.5, 0.3, and 0.1.

In another example, different weights may be set for different frequencies of interaction. For example, a quantity of times that a traffic participant within a range of 60 m around the ego-vehicle travels into or travels away from a lane on which the ego-vehicle travels is counted. If the quantity of times is greater than or equal to 5, a corresponding weight is 0.5. If the quantity of times is greater than or equal to 2 and less than 5, a corresponding weight is 0.3. If the quantity of times is less than 2, a corresponding weight is 0.1.

In still another example, different weights may be set for different quantities of traffic participants. For example, a quantity of traffic participants within a range of 60 m around the ego-vehicle is counted. If the quantity is greater than or equal to 5, a corresponding weight is 0.5. If the quantity of traffic participants within a range of 60 m around the ego-vehicle is greater than or equal to 2 and less than 5, a corresponding weight is 0.3. If the quantity of traffic participants within a range of 60 m around the ego-vehicle is less than 2, a corresponding weight is 0.1.

For another example, a quantity of traffic participants within a range of 60 m to 100 m around the ego-vehicle is counted. If the quantity is greater than or equal to 5, a corresponding weight is 0.3. If the quantity of traffic participants within a range of 60 m to 100 m around the ego-vehicle is greater than or equal to 2 and less than 5, a corresponding weight is 0.2. If the quantity of traffic participants within a range of 60 m to 100 m around the ego-vehicle is less than 2, a corresponding weight is 0.1.

For still another example, a quantity of traffic participants within a range of 100 m to 120 m around the ego-vehicle is counted. If the quantity is greater than or equal to 5, a corresponding weight is 0.2. If the quantity of traffic participants within a range of 100 m to 120 m around the ego-vehicle is greater than or equal to 2 and less than 5, a corresponding weight is 0.1. If the quantity of traffic participants within a range of 100 m to 120 m around the ego-vehicle is less than 2, a corresponding weight is 0.

In yet another example, different weights may be set for different weather conditions. For example, a weight corresponding to rainy and snowy weather is 0.5, a weight corresponding to heavy fog is 0.3, a weight corresponding to strong wind is 0.2, a weight corresponding to a cloudy day is 0.1, and a weight corresponding to another case is 0.

In still yet another example, different weights may be set for different road surface conditions. For example, a weight corresponding to freezing is 0.5, a weight corresponding to snow accumulation is 0.4, a weight corresponding to wetness and slipperiness is 0.3, a weight corresponding to bumpiness is 0.2, and a weight corresponding to flatness is 0.

In some other embodiments, the weight corresponding to each of the at least one evaluation item may be dynamically configured, and the weight corresponding to each of the at least one evaluation item is obtained based on a to-be-tested function, an environment, or a region.

For example, scores of different scenarios may be calculated based on the foregoing set weights. For example, in the testing scenario shown in FIG. 2, a weight corresponding to a straight road is 0.1, a weight corresponding to a frequency of interaction (which is 3) within a range of 60 m around the ego-vehicle is 0.3, a weight corresponding to a quantity of traffic participants (which is 4) within a range of 60 m around the ego-vehicle is 0.3, a weight corresponding to a quantity of traffic participants (which is 1) within a range of 60 m to 100 m around the ego-vehicle is 0.1, a weight corresponding to a quantity of traffic participants (which is 2) within a range of 60 m to 100 m around the ego-vehicle is 0.1, and a weight corresponding to a weather condition and a road surface condition (flatness) is 0. For example, a score of each scoring item is 1. The score of each scoring item is multiplied by the weight corresponding to each scoring item, to obtain a score 0.9 of the testing scenario shown in FIG. 2.

For another example, in the testing scenario shown in FIG. 3, a weight corresponding to a curved road is 0.3, a weight corresponding to a frequency of interaction (which is 1) within a range of 60 m around the ego-vehicle is 0.1, a weight corresponding to a quantity of traffic participants (which is 1) within a range of 60 m around the ego-vehicle is 0.1, a weight corresponding to a quantity of traffic participants (which is 1) within a range of 60 m to 100 m around the ego-vehicle is 0.1, a weight corresponding to a quantity of traffic participants (which is 2) within a range of 60 m to 100 m around the ego-vehicle is 0.1, a weight corresponding to a weather condition (a cloudy day) is 0.1, and a weight corresponding to a road surface condition (flatness) is 0. For example, a score of each scoring item is 1. The score of each scoring item is multiplied by the weight corresponding to each scoring item, to obtain a score of the testing scenario 0.8 shown in FIG. 3.

For still another example, in the testing scenario shown in FIG. 4, a weight corresponding to a junction is 0.5, a weight corresponding to a frequency of interaction (which is 3) within a range of 60 m around the ego-vehicle is 0.3, a weight corresponding to a quantity of traffic participants (which is 2) within a range of 60 m around the ego-vehicle is 0.1, a weight corresponding to a quantity of traffic participants (which is 1) within a range of 60 m to 100 m around the ego-vehicle is 0.1, a weight corresponding to a quantity of traffic participants (which is 1) within a range of 60 m to 100 m around the ego-vehicle is 0.1, a weight corresponding to a weather condition (a cloudy day) is 0.1, and a weight corresponding to a road surface condition (flatness) is 0. For example, a score of each scoring item is 1. The score of each scoring item is multiplied by the weight corresponding to each scoring item, to obtain that a score of the testing scenario 1.2 shown in FIG. 3.

In an example, when the weight corresponding to each of the at least one evaluation item is obtained based on the to-be-tested function, the weight may be dynamically configured based on different to-be-tested functions. For example, the to-be-tested function is a left-turn function at a junction. From human driving experience, a vehicle passing a junction needs to obey a traffic light and avoid another traffic participant, and driving difficulty at a junction is sequentially greater than that on a curved road and a straight road. A testing scenario at a junction may be the only one to focus on. A high weight is set for the junction, for example, set to 0.5, and low weights are set for the straight road and the curved road. For example, the weight corresponding to the curved road is set to 0.1, and the weight corresponding to the straight road is set to 0. In addition, high weights are set for the frequency of interaction between the vehicle and the traffic participant and the quantity of traffic participants counted in the range with the vehicle as the center of the circle and the preset distance as the radius, so that a critical scenario under a junction condition with a high frequency of interaction between the ego-vehicle and the traffic participant and a large quantity of other traffic participants who are close to the ego-vehicle can be obtained.

It should be noted that, when running time of the at least one testing scenario in step 101 is the same, a scenario score may be directly calculated by using a statistical value of the frequency of interaction between the vehicle and the traffic participant and a statistical value of the quantity of traffic participants. If the running duration of the at least one testing scenario is different, the statistical value of the frequency of interaction between the vehicle and the traffic participant and the statistical value of the quantity of traffic participants in each scenario may be normalized. To be specific, the statistical value of the frequency of interaction between the vehicle and the traffic participant and the statistical value of the quantity of traffic participants in each testing scenario are normalized into statistical values within same running duration, for example, normalized into statistical values within unit time. The statistical value of the frequency of interaction between the vehicle and the traffic participant and the statistical value of the quantity of traffic participants may be divided by running duration of the testing scenario, and then a scenario score is calculated based on the statistical values within the unit time. For example, running duration of a testing scenario 1 is 2s, a frequency of interaction is 2, and a normalized frequency of interaction (namely, an average frequency of interaction per second) is 1, a quantity of traffic participants within a range of 60 m is 15, and a normalized quantity of traffic participants (namely, an average quantity of traffic participants per second) is 7.5. Running duration of a testing scenario 2 is 5s, a frequency of interaction is 6, a normalized frequency of interaction (namely, an average frequency of interaction per second) is 1.2, a quantity of traffic participants within a range of 60 m is 25, and a normalized quantity of traffic participants (namely, an average quantity of traffic participants per second) is 5.

In some other examples, the weight corresponding to each of the at least one evaluation item may alternatively be obtained based on the environment, and a weight that corresponds to each of the at least one evaluation item and that is dynamically configured based on a different environment is different. The environment may include weather, a road surface condition, or the like.

In some other examples, the weight corresponding to each of the at least one evaluation item may alternatively be obtained based on the region, and a weight that corresponds to each of the at least one evaluation item and that is dynamically configured based on a different region is different. The region may be, for example, a city. For example, a weight that corresponds to each of the at least one evaluation item and that is configured for a city A is different from a weight that corresponds to each of the at least one evaluation item and that is configured for a city B.

It should be noted that the weight corresponding to each of the at least one evaluation item is relative, and may be set based on relative criticality of each evaluation item. A sum of weights corresponding to the at least one evaluation item may be any value.

In this embodiment of this application, a higher weight is set for an evaluation item with higher criticality, and a lower weight is set for an evaluation item with lower criticality. In this way, a testing scenario with a higher score indicates that the scenario is highly complex and has a higher requirement on performance of the intelligent driving system. Then, the testing scenarios whose scores are greater than the first preset threshold are selected as critical scenarios. These critical scenarios have high values for testing the performance of the intelligent driving system, and may be added to a testing scenario library, to perform subsequent testing on the intelligent driving system.

After the weight corresponding to each of the at least one evaluation item is determined, the score corresponding to each testing scenario in the at least one testing scenario may be determined based on the testing data of the at least one testing scenario, the at least one evaluation item, and the weight corresponding to each of the at least one evaluation item. Then, the at least one critical testing scenario whose score is greater than or equal to the first preset threshold is selected from the at least one testing scenario.

In some other embodiments, the at least one critical scenario may be determined with reference to a score and a metric algorithm, and the at least one critical scenario is determined from the at least one testing scenario based on the score corresponding to each of the at least one testing scenario, the weight corresponding to each of the at least one evaluation item, and at least one evaluation metric corresponding to the to-be-tested function. In a possible implementation, the score corresponding to the at least one critical testing scenario is greater than or equal to the first preset threshold, and the testing data of the at least one critical testing scenario meets the at least one evaluation metric corresponding to the to-be-tested function.

In this embodiment, an example in which the weight corresponding to each of the at least one evaluation item may be obtained based on the to-be-tested function is used. For example, the to-be-tested function is a left-turn function at a junction, and the at least one evaluation metric may include but is not limited to performing left-turn, avoiding a collision, and obeying a traffic rule (for example, not running a red light). Then, based on the testing data of the at least one testing scenario and the weight that corresponds to each of the at least one evaluation item and that is obtained based on the to-be-tested function, the score corresponding to each of the at least one testing scenario is determined, and a testing scenario whose score is greater than or equal to the first preset threshold is determined from the at least one testing scenario. Then, the testing scenario whose score is greater than or equal to the first preset threshold is evaluated with reference to the metric algorithm, and a testing scenario that meets the at least one evaluation metric corresponding to the to-be-tested function is determined, as the critical testing scenario, from the testing scenario whose score is greater than or equal to the first preset threshold. In this way, the critical testing scenario with a high value for testing the to-be-tested function of the intelligent driving system may be specifically selected.

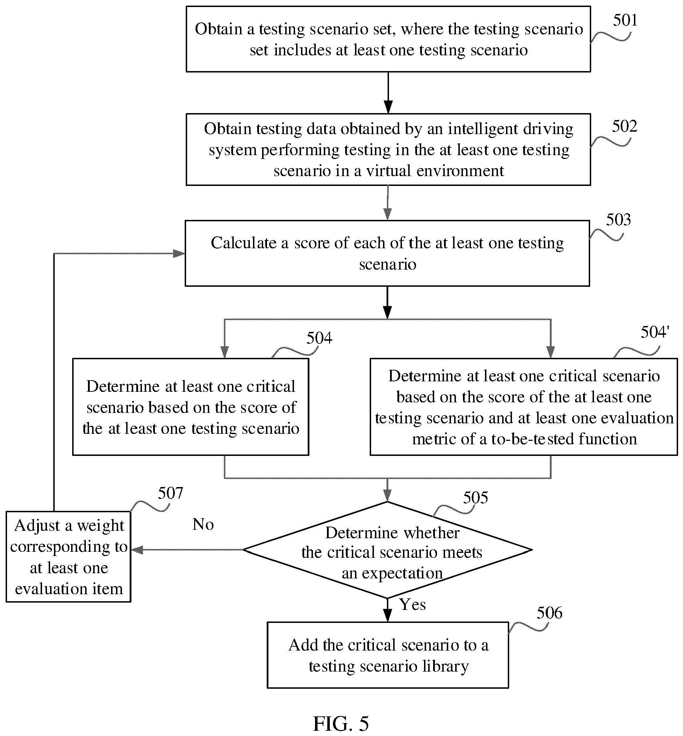

The following provides a specific example of a scenario obtaining method. As shown in FIG. 5, the method may include the following steps:
Step 501: Obtain a testing scenario set, where the testing scenario set includes at least one testing scenario.
Step 502: Obtain testing data obtained by an intelligent driving system performing testing in the at least one testing scenario in a virtual environment, where
the testing data includes behavioral data of the intelligent driving system in the at least one testing scenario.

Step 503: Calculate a score of each of the at least one testing scenario.

Herein, the score corresponding to the at least one testing scenario is obtained based on the testing data of the testing scenario and at least one evaluation item, and the at least one evaluation item represents criticality of a testing scenario.

After step 503, step 504 or step 504' may be performed.

Step 504: Determine at least one critical scenario based on the score of the at least one testing scenario, where a score corresponding to the at least one critical testing scenario is greater than or equal to a first preset threshold; and then continue to perform step 505.

Step 504': Determine at least one critical scenario based on the score of the at least one testing scenario and at least one evaluation metric of a to-be-tested function, where a score corresponding to the at least one critical testing scenario is greater than or equal to a first preset threshold, and testing data of the at least one critical testing scenario meets the at least one evaluation metric corresponding to the to-be-tested function; and then continue to perform step 505.

Step 505: Determine whether the critical scenario meets an expectation, and if the critical scenario meets the expectation, perform step 505; or if the critical scenario does not meet the expectation, perform step 506.

Step 506: Add the critical scenario to a testing scenario library.

Step 507: Adjust a weight corresponding to the at least one evaluation item; and then continue to perform step 502.

According to the foregoing example, for massive testing scenarios, a large quantity of invalid scenarios may be removed in a process of extracting a critical scenario, to save time for extracting the critical scenario, reduce labor costs, and improve effectiveness of scenario selection.

### Embodiment 2

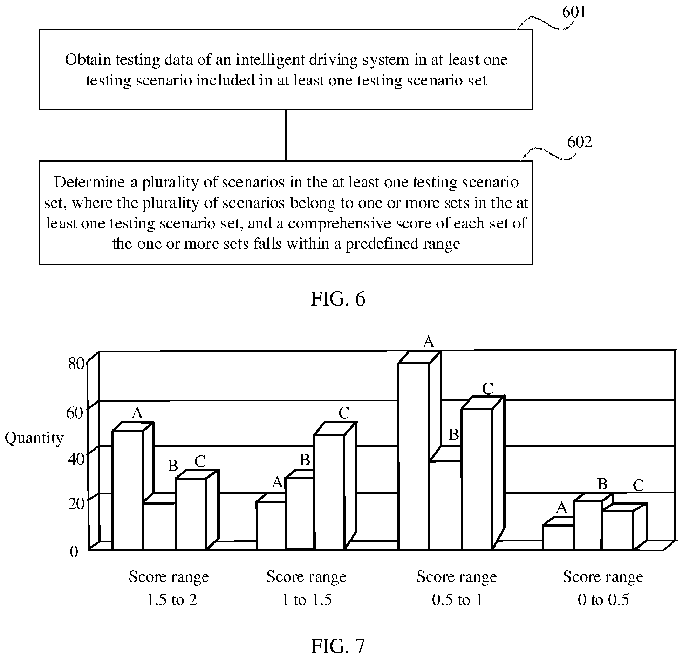

FIG. 6 is a schematic flowchart of another scenario obtaining method according to an embodiment of this application. The method may be performed by an autonomous driving scenario extracting apparatus. As shown in FIG. 6, the method may include the following steps:
Step 601: Obtain testing data of an intelligent driving system in at least one testing scenario included in at least one testing scenario set, where
the testing data includes behavioral data of the intelligent driving system in the at least one testing scenario.

Step 602: Determine a plurality of scenarios in the at least one testing scenario set, where the plurality of scenarios belong to one or more sets in the at least one testing scenario set, and a comprehensive score of each set of the one or more sets falls within a predefined range; and
the comprehensive score of each set is obtained based on testing data of each set and at least one evaluation item, and the at least one evaluation item represents criticality of a testing scenario.

In a possible implementation, for a specific implementation of the at least one evaluation item, refer to related content in Embodiment 1. Details are not described herein again.

In a possible implementation, the comprehensive score of each set may be obtained based on the testing data of each set and a weight corresponding to each of the at least one evaluation item.

Herein, the weight corresponding to each of the at least one evaluation item may be implemented in a plurality of manners. In a possible implementation, the weight corresponding to each of the at least one evaluation item may be preconfigured, and the weight corresponding to each of the at least one evaluation item belongs to a predefined weight set. For a specific implementation, refer to related content of preconfiguring the weight corresponding to each of the at least one evaluation item in Embodiment 1.

In another possible implementation, the weight corresponding to each of the at least one evaluation item may be obtained based on a to-be-tested function, an environment, or a region. For a specific implementation, refer to related content of dynamically configuring the weight corresponding to each of the at least one evaluation item in Embodiment 1.

In this embodiment of this application, after the comprehensive score of each testing scenario set is obtained, a plurality of testing scenarios are selected from a set whose comprehensive score falls within the predefined range. There is no need to evaluate the to-be-tested function for all testing scenarios and manually check a scenario in which evaluation fails. This may reduce time for a scenario extraction process, reduce labor costs, and improve testing efficiency of testing the intelligent driving system.

In this embodiment of this application, there may be a plurality of possible implementations of the foregoing comprehensive score of each set of the one or more sets.

In a possible implementation a, the comprehensive score of each set of the one or more sets may be obtained based on a quantity of testing scenarios that are in each set and whose scores fall within each of at least one score range, where the score of the testing scenario is obtained based on testing data of the testing scenario and the at least one evaluation item. Herein, for a specific implementation of the score of the testing scenario, refer to related content of the score of each testing scenario in Embodiment 1. Details are not described herein again.

In this implementation, the score of each testing scenario may be first determined based on the testing data of the testing scenario and the weight corresponding to each of the at least one evaluation item. Then, the quantity of testing scenarios that are in each set and whose scores fall within each of the at least one score range is counted, and the comprehensive score of each set is determined based on a statistical result.

For example, three testing scenario sets A, B, and C are used, and at least one score range is separately 1.5 to 2, 1 to 1.5, 0.5 to 1, and 0 to 0.5. As shown in FIG. 7, it is counted that in the testing scenario set A, a quantity of testing scenarios that fall within the score range 1.5 to 2 is 50, a quantity of testing scenarios that fall within the score range 1 to 1.5 is 20, a quantity of testing scenarios that fall within the score range 0.5 to 1 is 80, and a quantity of testing scenarios that fall within the score range 0 to 0.5 is 10. It is counted that in the testing scenario set B, a quantity of testing scenarios that fall within the score range 1.5 to 2 is 20, a quantity of testing scenarios that fall within the score range 1 to 1.5 is 30, a quantity of testing scenarios that fall within the score range 0.5 to 1 is 40, and a quantity of testing scenarios that fall within the score range 0 to 0.5 is 20. It is counted that in the testing scenario set C, a quantity of testing scenarios that fall within the score range 1.5 to 2 is 30, a quantity of testing scenarios that fall within the score range 1 to 1.5 is 50, a quantity of testing scenarios that fall within the score range 0.5 to 1 is 60, and a quantity of testing scenarios that fall within the score range 0 to 0.5 is 15.

After the quantity of testing scenarios that are in each set and whose scores fall within each of the at least one score range is obtained, a sum of scores of each set may be determined based on the quantity of testing scenarios that are in each set and whose scores fall within each of the at least one score range and a weight corresponding to each of the at least one score range.

For example, the weight corresponding to each of the at least one score range may be determined based on a score of the score range. A larger score indicates higher criticality of a scenario and a higher value of the scenario. For example, as shown in FIG. 7, a weight corresponding to the score range 1.5 to 2 is set to 0.8, a weight corresponding to the score range 1 to 1.5 is set to 0.5, a weight corresponding to the score range 0.5 to 1 is set to 0.3, and a weight corresponding to the score range 0 to 0.5 is set to 0.1. In this case, a comprehensive score of the testing scenario set A is a sum of 50*0.8, 20*0.5, 80*0.3, and 10*0.1, that is, 75; a comprehensive score of the testing scenario set B is a sum of 20*0.8, 30*0.5, 40*0.3, and 20*0.1, that is, 45; and a comprehensive score of the testing scenario set C is a sum of 30*0.8, 50*0.5, 60*0.3, and 15*0.1, that is, 68.5. Therefore, it may be determined that effectiveness of the testing scenario set A is greater than effectiveness of the testing scenario set C, and effectiveness of the testing scenario set C is greater than effectiveness of the testing scenario set B.

Then, the set whose comprehensive score falls within the predefined range is determined from the at least one testing scenario set based on the comprehensive score of each set. For example, if the predefined range is set to be that the comprehensive score is not less than 60, the testing scenario sets A and B fall within the predefined range, and a plurality of scenarios may be determined from the testing scenario sets A and B to form a testing scenario library.

During specific implementation, a plurality of scenarios whose scores are greater than the first preset threshold may be determined from the set that falls within the predefined range, or a plurality of scenarios whose scores are greater than the first preset threshold and that meet at least one evaluation metric of the to-be-tested function may be determined from the set that falls within the predefined range. Then, the plurality of determined scenarios form a testing scenario library.

In the foregoing implementation, a large quantity of testing scenario sets with high criticality may be selected from the at least one testing scenario set, to help select, from the large quantity of testing scenario sets with high criticality, a critical testing scenario with a high value for testing performance of the intelligent driving system.

In a possible implementation b, the comprehensive score of each set of the one or more sets is obtained based on a quantity of testing scenarios that are in each set and that meet a preset condition, where the preset condition includes that the score of the testing scenario is greater than or equal to the first preset threshold, and the testing data of the testing scenario meets at least one evaluation metric corresponding to the to-be-tested function.

In this implementation, for each set, the score of each testing scenario may be first determined based on the testing data of the testing scenario and the weight corresponding to each of the at least one evaluation item. In addition, a testing scenario that is in each set and that meets the at least one evaluation metric is determined based on the at least one evaluation metric corresponding to the to-be-tested function, and then a quantity of testing scenarios that are in each set and that not only have scores greater than the first preset threshold, but also meet the at least one evaluation metric is counted.

For example, each of testing scenario sets C, D, and E includes 500 testing scenarios. The testing scenario set C includes 430 testing scenarios whose scores are greater than the first preset threshold and that meet the at least one evaluation metric. The testing scenario set D includes 360 testing scenarios whose scores are greater than the first preset threshold and that meet the at least one evaluation metric. The testing scenario set E includes 270 testing scenarios whose scores are greater than the first preset threshold and that meet the at least one evaluation metric.

After the quantity of testing scenarios that are in each set and meet the preset condition is determined, the comprehensive score of the set is determined based on the quantity of testing scenarios that meet the preset condition in the set. For example, different corresponding comprehensive scores may be set when the quantity of testing scenarios that meet the preset condition falls within different quantity range. For example, a total quantity 500 is divided into 10 ranges. A comprehensive score corresponding to the first quantity range 0 to 50 is 10, and a comprehensive score corresponding to each subsequent quantity range increases by 10. In other words, a comprehensive score corresponding to a quantity range 51 to 100 is 20, a comprehensive score corresponding to a quantity range 101 to 150 is 30, a comprehensive score corresponding to a quantity range 151 to 200 is 40, a comprehensive score corresponding to a quantity range 201 to 250 is 50, ..., and a comprehensive score corresponding to a quantity range 451 to 500 is 100. In this case, a comprehensive score corresponding to the testing scenario set C is 90, a comprehensive score corresponding to the testing scenario set D is 80, and a comprehensive score corresponding to the testing scenario set E is 60.

After the comprehensive score of each set is determined, a set whose comprehensive score falls within the predefined range may be determined from the at least one testing scenario set. For example, if the predefined range is set to be that the comprehensive score is not less than 60, the testing scenario sets C, D and E all fall within the predefined range, and a plurality of scenarios may be determined from the testing scenario sets C, D and E to form a testing scenario library.

During specific implementation, a plurality of scenarios whose scores are greater than the first preset threshold may be determined from the set that falls within the predefined range, or a plurality of scenarios whose scores are greater than the first preset threshold and that meet at least one evaluation metric of the to-be-tested function may be determined from the set that falls within the predefined range. Then, the plurality of determined scenarios form a testing scenario library.

In the foregoing manner, a large quantity of testing scenario sets with high criticality and with a high value for testing the to-be-tested function of the intelligent driving system may be specifically selected from the at least one testing scenario set, to help select, from the large quantity of testing scenario sets with high criticality, a critical testing scenario with a high value for testing the to-be-tested function of the intelligent driving system.

In a possible implementation c, the comprehensive score of each set of the one or more sets may alternatively be obtained based on a sum of scores of testing scenarios included in the set.

In a possible implementation d, the comprehensive score of each set of the one or more sets may alternatively be obtained based on an average value of scores of all testing scenarios included in the set.

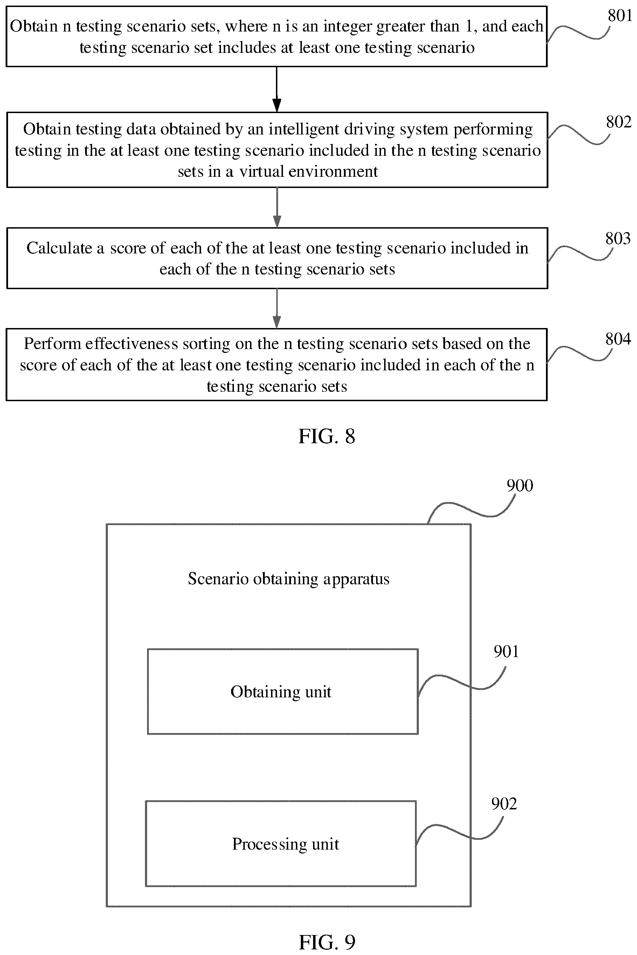

The autonomous driving scenario extraction method in this embodiment of this application may be applied to scenario evaluation, to determine effectiveness of testing scenario. The following provides a specific evaluation procedure. As shown in FIG. 8, the evaluation procedure includes the following steps:

Step 801: Obtain n testing scenario sets, where n is an integer greater than 1, and each testing scenario set includes at least one testing scenario.

Step 802: Obtain testing data obtained by an intelligent driving system performing testing in the at least one testing scenario included in the n testing scenario sets in a virtual environment, where
the testing data includes behavioral data of the intelligent driving system in the at least one testing scenario.

Step 803: Calculate a score of each of the at least one testing scenario included in each of the n testing scenario sets.

Step 804: Perform effectiveness sorting on the n testing scenario sets based on the score of each of the at least one testing scenario included in each of the n testing scenario sets.

Step 804 may be implemented in a plurality of manners. In a possible implementation, for each set, a quantity of testing scenarios that are in each set and whose scores fall within each of the at least one score range is determined based on the score of each of the at least one testing scenario included in each set, and then effectiveness sorting on the n testing scenario sets is performed based on the quantity of testing scenarios that are in each set and whose scores fall within each of the at least one score range. A larger quantity of testing scenarios that are in a testing scenario set and that fall within a range with a higher score indicates higher effectiveness of the testing scenario set.

In another possible implementation, for each set, a quantity of testing scenarios that are in each set and whose scores are greater than a first preset threshold is determined based on the score of each of the at least one testing scenario included in each set, and then effectiveness sorting on the n testing scenario sets is performed based on the quantity of testing scenarios that are in each set and whose scores are greater than the first preset threshold. A larger quantity of testing scenarios that are in a testing scenario set and whose scores are greater than the first preset threshold indicates higher effectiveness of the testing scenario set.

In still another possible implementation, for each set, a quantity of testing scenarios that are in each set and that meet a preset condition is determined based on the score of each of the at least one testing scenario included in each set, where the preset condition is that the score is greater than a first preset threshold, and a to-be-tested function of at least one evaluation metric is met; and then effectiveness sorting on the n testing scenario sets is performed based on the quantity of testing scenarios that are in each set and that meet the preset condition. A larger quantity of testing scenarios that are in a testing scenario set and that meet the preset condition indicates higher effectiveness of the testing scenario set.

In yet another possible implementation, for each set, an average score of testing scenarios included in each set is determined based on the score of each of the at least one testing scenario included in each set, and then effectiveness sorting on the n testing scenario sets is performed based on the average score of the testing scenarios included in each set. A larger average score corresponding to a testing scenario set indicates higher effectiveness of the testing scenario set.

In still yet another possible implementation, for each set, a sum of scores of testing scenarios included in each set is determined based on the score of each of the at least one testing scenario included in each set, and then effectiveness sorting on the n testing scenario sets is performed based on the sum of scores of all the testing scenarios included in each set. A larger sum of scores of a testing scenario set indicates higher effectiveness of the testing scenario set.

In the foregoing manner, effectiveness of different testing scenario sets can be quickly evaluated, and labor costs can be saved.

Based on the foregoing embodiments and a same concept, an embodiment of this application further provides a scenario obtaining apparatus, configured to perform the steps performed by the scenario obtaining apparatus in Embodiment 1 or Embodiment 2 in the foregoing method. For related features, refer to the foregoing method embodiments. Details are not described herein again.

As shown in FIG. 9, the scenario obtaining apparatus 900 may include an obtaining unit 901 and a processing unit 902.

When the scenario obtaining apparatus 900 performs the method in Embodiment 1 in the foregoing method, the obtaining unit 901 is configured to obtain testing data of an intelligent driving system in at least one testing scenario, where the testing data includes behavioral data of the intelligent driving system in the at least one testing scenario. The processing unit 902 is configured to determine at least one critical testing scenario in the at least one testing scenario, where a score corresponding to the at least one critical testing scenario is greater than or equal to a first preset threshold; and the score corresponding to the at least one critical testing scenario is obtained based on testing data of the critical testing scenario and at least one evaluation item, and the at least one evaluation item represents criticality of a testing scenario.

In a possible implementation, the score corresponding to the at least one critical testing scenario is obtained based on the testing data of the critical testing scenario, the at least one evaluation item, and a weight corresponding to each of the at least one evaluation item.

In a possible implementation, the weight corresponding to each of the at least one evaluation item belongs to a predefined weight set.

In a possible implementation, the weight corresponding to each of the at least one evaluation item is obtained based on a to-be-tested function, an environment, or a region.

In a possible implementation, the at least one critical testing scenario meets at least one evaluation metric corresponding to the to-be-tested function.

In a possible implementation, the at least one evaluation item includes one or more of the following items: a road type, a frequency of interaction between a vehicle and a traffic participant, a quantity of traffic participants counted in a range with the vehicle as a center of a circle and a preset distance as a radius, a weather condition, or a road surface condition.

When the scenario obtaining apparatus 900 performs the method in Embodiment 1 in the foregoing method, the obtaining unit 901 is configured to obtain testing data of an intelligent driving system in at least one testing scenario included in at least one testing scenario set, where the testing data includes behavioral data of the intelligent driving system in the at least one testing scenario. The processing unit 902 is configured to determine a plurality of testing scenarios in the at least one testing scenario set, where the plurality of testing scenarios belong to one or more sets of the at least one testing scenario set, and a comprehensive score of each set of the one or more sets falls within a predefined range; and the comprehensive score of each set is obtained based on testing data of each set and at least one evaluation item, and the at least one evaluation item represents criticality of a testing scenario.

In a possible implementation, the comprehensive score of each set is obtained based on the testing data of each set and a weight corresponding to each of the at least one evaluation item.

In a possible implementation, the weight corresponding to each of the at least one evaluation item belongs to a predefined weight set.

In a possible implementation, the weight corresponding to each of the at least one evaluation item is obtained based on a to-be-tested function, an environment, or a region.

In a possible implementation, the comprehensive score of each set of the one or more sets is obtained based on a quantity of testing scenarios that are in each set and whose scores fall within each of at least one score range, and the score of the testing scenario is obtained based on testing data of the testing scenario and the at least one evaluation item.

In a possible implementation, the comprehensive score of each set of the one or more sets is obtained based on a quantity of testing scenarios that are in each set and that meet a preset condition, where the preset condition includes that a score of a testing scenario is greater than or equal to a preset threshold, and testing data of the testing scenario meets at least one evaluation metric corresponding to the to-be-tested function.

In a possible implementation, the at least one evaluation item includes one or more of the following items: a road type, a frequency of interaction between a vehicle and a traffic participant, a quantity of traffic participants counted in a range with the vehicle as a center of a circle and a preset distance as a radius, a weather condition, or a road surface condition.

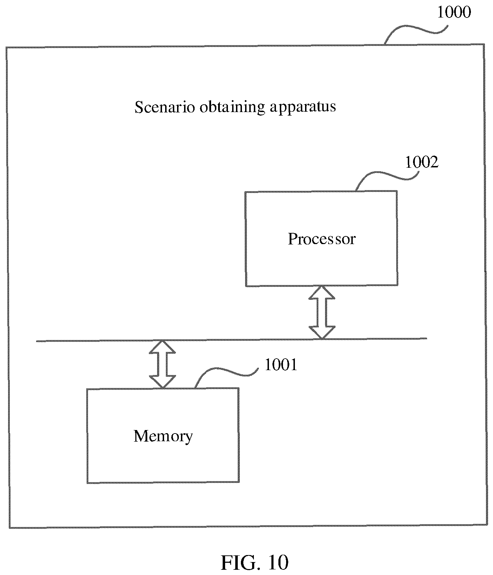

According to the foregoing methods, FIG. 10 is a schematic diagram of a structure of a scenario obtaining apparatus according to an embodiment of this application. As shown in FIG. 10, the scenario obtaining apparatus 1000 may be the scenario obtaining apparatus in Embodiment 1 or Embodiment 2. The scenario obtaining apparatus 1000 may include a memory 1001 and a processor 1002, and may further include a bus system. The processor 1002 and the memory 1001 may be connected by using the bus system.

It should be understood that the processor 1002 may be a chip. For example, the processor 1002 may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a micro controller (micro controller unit, MCU), a programmable logic controller (programmable logic device, PLD), or another integrated chip.

In an implementation process, the steps of the foregoing methods may be completed through an integrated logic circuit of hardware in the processor 1002 or by using instructions in a software form. The steps of the methods disclosed with reference to embodiments of this application may be directly performed and completed by a hardware processor, or may be performed and completed by using a combination of hardware and a software module in the processor 1002. The software module may be located in a storage medium mature in the art, such as a random access memory, a flash memory, a read-only memory, a programmable read-only memory or an electrically erasable programmable memory, or a register. The storage medium is located in the memory 1001, and the processor 1002 reads information in the memory 1001, and completes the steps in the foregoing methods in combination with hardware of the processor 1002.

It should be noted that the processor 1002 in this embodiment of this application may be an integrated circuit chip, and has a signal processing capability. In an implementation process, the steps in the foregoing method embodiments may be implemented through a hardware integrated logical circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The processor may implement or perform the methods, steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by a combination of hardware and a software module in the decoding processor. The software module may be located in a storage medium mature in the art, such as a random access memory, a flash memory, a read-only memory, a programmable read-only memory or an electrically erasable programmable memory, or a register. The storage medium is located in the memory, and the processor reads information in the memory, and completes the steps in the foregoing methods in combination with hardware of the processor.

It may be understood that the memory 1001 in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. By way of example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any other proper types of memories.

This application further provides a vehicle. The vehicle may include the foregoing scenario obtaining apparatus.

According to the methods provided in embodiments of this application, this application further provides a computer program product. The computer program product includes computer program code or instructions. When the computer program code or the instructions is/are run on a computer, the computer is enabled to perform the method according to any one of the method embodiments.

According to the methods provided in embodiments of this application, this application further provides a computer-readable storage medium. The computer-readable medium stores program code. When the program code is run on a computer, the computer is enabled to perform the method according to any one of the method embodiments.

All or some of the foregoing embodiments may be implemented using software, hardware, firmware, or any combination thereof. When the software is used to implement the embodiments, all or some of the foregoing embodiments may be implemented in a form of a computer program product. The computer program product includes one or more computer instructions. When the computer program instructions are loaded or executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium that can be accessed by the computer, or a data storage device, for example, a server or a data center in which one or more usable media are integrated. The usable medium may be a magnetic medium (for example, a floppy disk, a hard disk, or a magnetic tape), an optical medium (for example, a DVD), or a semiconductor medium. The semiconductor medium may be a solid-state drive (solid-state drive, SSD).

A person skilled in the art may clearly understand that, for the purpose of convenient and brief description, for a detailed working process of the foregoing system, apparatus, and unit, refer to a corresponding process in the foregoing method embodiments, and details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may or may not be physical units, and may be located in one position, or may be distributed on a plurality of network elements. Some or all of the units may be selected according to actual requirements to achieve the objectives of the technical solutions of this application.

The foregoing descriptions are merely specific implementations of this application. Any variation or replacement readily figured out by a person skilled in the art based on the specific implementations provided in this application shall fall within the protection scope of this application.

## Claims

1. A scenario obtaining method, comprising:
obtaining testing data of a driving system in at least one testing scenario, wherein the testing data comprises behavioral data of the driving system in the at least one testing scenario; and
determining at least one critical testing scenario in the at least one testing scenario, wherein a score corresponding to the at least one critical testing scenario is greater than or equal to a first preset threshold; and
the score corresponding to the at least one critical testing scenario is obtained based on testing data of the critical testing scenario and at least one evaluation item, and the at least one evaluation item represents criticality of a testing scenario.

2. The method according to claim 1, wherein the score corresponding to the at least one critical testing scenario is obtained based on the testing data of the critical testing scenario and a weight corresponding to each of the at least one evaluation item.

3. The method according to claim 2, wherein the weight corresponding to each of the at least one evaluation item belongs to a predefined weight set.

4. The method according to claim 2, wherein the weight corresponding to each of the at least one evaluation item is obtained based on a to-be-tested function, an environment, or a region.

5. The method according to any one of claims 1 to 4, wherein the testing data of the at least one critical testing scenario meets at least one evaluation metric corresponding to the to-be-tested function.

6. The method according to any one of claims 1 to 5, wherein the at least one evaluation item comprises one or more of the following items:
a road type;
a frequency of interaction between a vehicle and a traffic participant;
a quantity of traffic participants counted in a range with the vehicle as a center of a circle and a preset distance as a radius;
a weather condition; or
a road surface condition.

7. A scenario obtaining method, comprising:
obtaining testing data of a driving system in at least one testing scenario comprised in at least one testing scenario set, wherein the testing data comprises behavioral data of the driving system in the at least one testing scenario; and
determining a plurality of testing scenarios in the at least one testing scenario set, wherein the plurality of testing scenarios belong to one or more sets in the at least one testing scenario set, and a comprehensive score of each set of the one or more sets falls within a predefined range; and
the comprehensive score of each set is obtained based on testing data of each set and at least one evaluation item, and the at least one evaluation item represents criticality of a testing scenario.

8. The method according to claim 7, wherein the comprehensive score of each set is obtained based on the testing data of each set and a weight corresponding to each of the at least one evaluation item.

9. The method according to claim 8, wherein the weight corresponding to each of the at least one evaluation item belongs to a predefined weight set.

10. The method according to claim 8, wherein the weight corresponding to each of the at least one evaluation item is obtained based on a to-be-tested function, an environment, or a region.

11. The method according to any one of claims 7 to 10, wherein the comprehensive score of each set of the one or more sets is obtained based on a quantity of testing scenarios that are in each set and whose scores fall within each of at least one score range, and the score of the testing scenario is obtained based on testing data of the testing scenario and the at least one evaluation item.

12. The method according to any one of claims 7 to 10, wherein the comprehensive score of each set of the one or more sets is obtained based on a quantity of testing scenarios that are in each set and that meet a preset condition, wherein the preset condition comprises that a score of a testing scenario is greater than or equal to a preset threshold, and testing data of the testing scenario meets at least one evaluation metric corresponding to the to-be-tested function.

13. The method according to any one of claims 7 to 12, wherein the at least one evaluation item comprises one or more of the following items:
a road type;
a frequency of interaction between a vehicle and a traffic participant;
a quantity of traffic participants counted in a range with the vehicle as a center of a circle and a preset distance as a radius;
a weather condition; or
a road surface condition.

14. A scenario obtaining apparatus, comprising:
an obtaining unit, configured to obtain testing data of a driving system in at least one testing scenario, wherein the testing data comprises behavioral data of the driving system in the at least one testing scenario; and
a processing unit, configured to determine at least one critical testing scenario in the at least one testing scenario, wherein a score corresponding to the at least one critical testing scenario is greater than or equal to a first preset threshold; and the score corresponding to the at least one critical testing scenario is obtained based on testing data of the critical testing scenario and at least one evaluation item, and the at least one evaluation item represents criticality of a testing scenario.

15. The apparatus according to claim 14, wherein the score corresponding to the at least one critical testing scenario is obtained based on the testing data of the critical testing scenario and a weight corresponding to each of the at least one evaluation item.

16. The apparatus according to claim 15, wherein the weight corresponding to each of the at least one evaluation item belongs to a predefined weight set.

17. The apparatus according to claim 15, wherein the weight corresponding to each of the at least one evaluation item is obtained based on a to-be-tested function, an environment, or a region.

18. The apparatus according to any one of claims 14 to 17, wherein the at least one critical testing scenario meets at least one evaluation metric corresponding to the to-be-tested function.

19. The apparatus according to any one of claims 14 to 18, wherein the at least one evaluation item comprises one or more of the following items:
a road type;
a frequency of interaction between a vehicle and a traffic participant;
a quantity of traffic participants counted in a range with the vehicle as a center of a circle and a preset distance as a radius;
a weather condition; or
a road surface condition.

20. A scenario obtaining apparatus, comprising:
an obtaining unit, configured to obtain testing data of a driving system in at least one testing scenario comprised in at least one testing scenario set, wherein the testing data comprises behavioral data of the driving system in the at least one testing scenario; and
a processing unit, configured to determine a plurality of testing scenarios in the at least one testing scenario set, wherein the plurality of testing scenarios belong to one or more sets in the at least one testing scenario set, and a comprehensive score of each set of the one or more sets falls within a predefined range; and the comprehensive score of each set is obtained based on testing data of each set and at least one evaluation item, and the at least one evaluation item represents criticality of a testing scenario.

21. The apparatus according to claim 20, wherein the comprehensive score of each set is obtained based on the testing data of each set and a weight corresponding to each of the at least one evaluation item.

22. The apparatus according to claim 21, wherein the weight corresponding to each of the at least one evaluation item belongs to a predefined weight set.

23. The apparatus according to claim 21, wherein the weight corresponding to each of the at least one evaluation item is obtained based on a to-be-tested function, an environment, or a region.

24. The apparatus according to any one of claims 20 to 23, wherein the comprehensive score of each set of the one or more sets is obtained based on a quantity of testing scenarios that are in each set and whose scores fall within each of at least one score range, and the score of the testing scenario is obtained based on testing data of the testing scenario and the at least one evaluation item.

25. The apparatus according to any one of claims 20 to 23, wherein the comprehensive score of each set of the one or more sets is obtained based on a quantity of testing scenarios that are in each set and that meet a preset condition, wherein the preset condition comprises that a score of a testing scenario is greater than or equal to a preset threshold, and testing data of the testing scenario meets at least one evaluation metric corresponding to the to-be-tested function.

26. The apparatus according to any one of claims 20 to 25, wherein the at least one evaluation item comprises one or more of the following items:
a road type;
a frequency of interaction between a vehicle and a traffic participant;
a quantity of traffic participants counted in a range with the vehicle as a center of a circle and a preset distance as a radius;
a weather condition; or
a road surface condition.

27. A scenario obtaining apparatus, wherein the apparatus comprises a memory and at least one processor, the memory is configured to store computer instructions, and the at least one processor is configured to invoke the computer instructions stored in the memory, to perform the method according to any one of claims 1 to 6, or perform the method according to any one of claims 7 to 13.

28. A computer-readable storage medium, wherein the computer-readable storage medium stores a computer program; and when the computer program is run on a computer, the method according to any one of claims 1 to 6 is implemented, or the method according to any one of claims 7 to 13 is implemented.

29. A computer program product, wherein the computer program product comprises a computer program or instructions; and when the computer program or the instructions is/are executed on a computer, the method according to any one of claims 1 to 6 is implemented, or the method according to any one of claims 7 to 13 is implemented.
